Europäisches Patentamt

European Patent Office

Office européen des brevets

(11) Veröffentlichungsnummer: **0 433 588 A1**

# (12) EUROPÄISCHE PATENTANMELDUNG

(21) Anmeldenummer: 90119323.5

(22) Anmeldetag: 09.10.90

(51) Int. Cl.5: **B29C 47/08**, B29C 47/66

(30) Priorität: 21.12.89 DE 3942350

(43) Veröffentlichungstag der Anmeldung:
26.06.91 Patentblatt 91/26

(84) Benannte Vertragsstaaten:
AT DE FR GB IT NL

(71) Anmelder: HERMANN BERSTORFF
Maschinenbau GmbH
An der Breiten Wiese 3/5
W-3000 Hannover 61(DE)

(72) Erfinder: Dienst, Manfred, Dipl.-Ing.
Kastanieneck 2
W-3167 Burgdorf(DE)
Erfinder: Aschemann, Arnold, Dipl.-Ing.
Feldstrasse 23
W-3207 Harsum 1(DE)

(54) Verschleissgeschütztes Gehäuse für eine Schneckenstrangpresse für die Verarbeitung von thermoplastischem Kunststoff, Kautschuk, Nahrungsmitteln oder dergleichen.

(57) Es werden korrosions- und verschleißgeschützte Gehäuse für eine Schneckenstrangpresse für die Verarbeitung von thermoplastischen Kunststoffen, Kautschuk, Nahrungsmitteln oder dergleichen offenbart, mit einer oder mehreren achsparallelen Schneckenbohrungen zur Aufnahme jeweils einer Schnecke. In den beiden Endbereichen der Gehäuseabschnitte werden in Richtung der Längsmittelachse der Schneckenbohrungen überstehende, die rotierende(n) Schnecke(n) führende Stützhülsen angeordnet, wodurch die auftretende Korrosion und der Verschleiß überwiegend auf diese Bauteile beschränkt wird.

Fig. 1

EP 0 433 588 A1

# VERSCHLEISSGESCHÜTZTES GEHÄUSE FÜR EINE SCHNECKENSTRANGPRESSE FÜR DIE VERARBEITUNG VON THERMOPLASTISCHEM KUNSTSTOFF, KAUTSCHUK, NAHRUNGSMITTELN ODER DERGLEICHEN

Die Erfindung betrifft verschleißgeschützte Gehäuse gemäß dem Oberbegriff von Patentanspruch 1.

Aus der DE-PS 24 26 732 ist ein verschleißgeschütztes Schneckengehäuse für eine Schneckenstrangpresse bekannt. Die Wandung der Gehäusebohrung weist gleichmäßig über ihren Umfang verteilte, durch verbleibende Zwischenstege begrenzte Ausnehmungen auf, in die teilförmige Verschleißeinsätze eingebracht sind.

Es ist mit einem sehr hohen Arbeits- und Zeitaufwand verbunden, in die Innenwandung eines Gehäuseabschnittes einzelne Ausnehmungen einzufräsen. Insbesondere ist jedoch auch die Herstellung der exakt in die eingefrästen Ausnehmungen einzu fassenden Verschleißteile mit einem sehr hohen Arbeitsaufwand verbunden. Da die einzelnen Verschleißstücke selbst sehr maßgenau gefertigt werden müssen, um einen festen Halt zu gewährleisten, sind sehr teure Werkzeugmaschinen erforderlich. Die einzusetzenden Bearbeitungswerkzeuge müssen eine noch größere Härte aufweisen, als die Verschleißstücke und sind daher als extrem kostenintensiv anzusehen.

Es ist die Aufgabe der vorliegenden Erfindung, korrosionsbeständige und verschleißgeschützte Gehäuse für Schneckenstrangpressen vorzuschlagen, die sehr kostengünstig und einfach hergestellt, leicht zusammengebaut und mit wenig Montageaufwand ausgewechselt werden können.

Die Aufgabe wird durch die im kennzeichnenden Teil des ersten Patentanspruchs beschriebenen Merkmale gelöst.

Vorteilhafte Weiterbildungen werden in den Ansprüchen 2 bis 10 beschrieben.

Durch die Anordnung von Hülsen in den beidseitigen Endbereichen der Gehäuseabschnitte wird die Korrosion und der Verschleiß primär auf die Hülsen beschränkt, weil die Hülsen geringfügig über die Verschleißeinsätze in den mittleren Gehäusebereichen vorstehen. Die Korrosion in den Zylindern ist an sich an allen Stellen gleich. Da jedoch auf die vorstehenden Hülsen eine Reibwirkung durch das zwischen dem Stegrücken und der Zylinderinnenwandung sich befindende abrasive Material stattfindet, wird der Verschleiß auf die Hülsen konzentriert.

Ab einem gewissen Verschleißgrad brauchen nur die Hülsen ausgewechselt zu werden und nicht der gesamte Verschleißeinsatz, so daß der Auswechselvorgang äußerst preisgünstig und leichter durchführbar ist. Insbesondere ist jedoch eine relativ kurze Hülse, die eine leichte Stützfunktion übernimmt und die in Einzelfällen je nach den Abrieb- und Korrosionseigenschaften des zu verarbeitenden Materials fast als Scheibe ausgebildet sein kann, besonders preisgünstig herstellbar und schnell auszuwechseln.

In vorteilhafter Weise werden die Hülse aus einem hochkorrosionsbeständigen Metall, mit hochabriebfesten Eigenschaften, hergestellt. Die Abriebbeigenschaften sollten höher liegen als die Abriebbeigenschaften des Materials der mittleren Bohrungsauskleidungen. Durch diese Ausführung wird der Verschleiß fast ausschließlich auf die Stützhülsen beschränkt.

In dieser Verbindung ist darauf hinzuweisen, daß beim Einsatz von Hülsen aus hochkorrosionsbeständigen und hochabriebfestem Metall und einer Bohrungsauskleidung der mittleren Gehäuseabschnitte aus preisgünstigerem, nur leicht abriebfestem Metall eine Kosteneinsparung bis zu 90 % erreichbar ist, im Vergleich zu einer Bohrungsauskleidung bzw. einem Verschleißschutzeinsatz über die gesamte Bohrungslänge mit einem hochkorrosionsbeständigen und hochabriebfestem Metall.

Der Überstehabstand der Hülsen gegenüber der Auskleidung der mittleren Gehäuseabschnitte ist abhängig von den Abriebeigenschaften des zu verarbeitenden Materials, d.h. der in einem Kunststoff eingearbeiteten Füllstoffe, z.B. Glasfaserteilchen.

Wenn eine längere Standzeit erwünscht ist, sollte die Überstehlänge der Hülsen größer gewählt werden.

Auch die axiale Länge der Hülsen ist vom zu verarbeitenden Kunststoff abhängig. So ist es beispielsweise ratsam, bei der Verarbeitung von hochabriebfestem Bimetall eine Hülse mit einer axialen Länge von 2 D (D = Schneckendurchmesser) und einer Überstehlänge von 2 mm einzusetzen, weil selbst mit einer derartig großen Hülsenfläche nur eine sehr geringe Standzeit erreicht wird.

In vorteilhafter Ausgestaltung der Erfindung können die, die Stützfunktion mit den eingesetzten Stützhülsen, übernehmenden beide Endbereiche der einzelnen Zylinderabschnitte auch als ganze Zylinderabschnitte ausgebildet sein.

Bei einer derartigen Ausführungsform wird ein Zylinderabschnitt mit einer über die gesamte Länge des Innenzylinderabschnittes ausgekleidete, überstehende, d.h. im Durchmesser verringerten Hülse im Wechsel mit einem Zylinderabschnitt ohne Hülse angeordnet. Der Zylinderabschnitt ohne Stützhülse weist einen etwas größeren Durchmesser auf. Die Korrosion und der Verschleiß machen sich somit sich primär bei den Zylinderabschnitten mit eingesetzten Hülsen bemerkbar.

Ausführungsbeispiele der Erfindung werden in den Zeichnungen gezeigt und in der nachfolgenden Beschreibung erläutert.

Es zeigen:

Fig. 1   einen Längsschnitt durch einen Gehäuseabschnitt eines Einschneckenextruders.

Fig. 2   einen Querschnitt durch ein Gehäuse eines Doppelschneckenextruders mit eingesetzter Stützhülse zusätzlich in einem Verschleißeinsatz.

Fig. 3   einen Querschnitt, wie gezeigt in Fig. 1, mit eingesetzten Stützhülsen sowie im mittleren Bereich mit einem Verschleißeinsatz.

Fig. 4   einen Querschnitt gemäß IV-IV in Fig. 3.

Fig. 5   einzelne Zylinderabschnitte im Wechsel mit Zylinderabschnitten mit Hülsen.

In einem Gehäuseabschnitt 1 mit jeweils an beiden Enden angeordneten Verbindungsflanschen 2 und 3 sind an beiden Enden Hülsen 4 und 5 eingesetzt. Mit dem Bezugszeichen 7 wird der Überstehabstand der Hülse 4 gegenüber der Zylinderbohrung im mittleren Bereich gekennzeichnet. Mit dem Bezugszeichen d wird der Durchmesser im Bereich der Hülsen und mit D im Bereich ohne Stützhülsen bezeichnet.

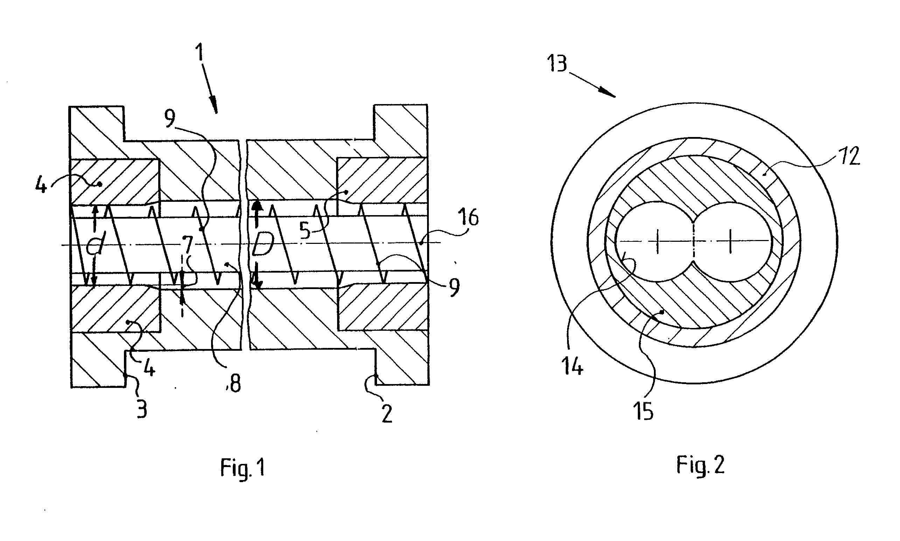

Eine in Fig. 1 schematisiert dargestellte Schnecke 8 kann auf den Hülsen 4 und 5 geführt werden. Wenn die Schnecke mit einer bestimmten Geschwindigkeit rotiert, erfolgt eine Selbstzentrierung, so daß die Schneckenstege 9 die Hülsen 4 und 5 nicht berühren. Die Korrosion und der Verschleiß ist jedoch im Bereich der Hülsen größer (der Förderdruck ist aufgrund des geringeren Abstandes von den Schneckenstegrücken 9 zu den Hülsen 4 und 5 geringer) als der Verschleiß im mittleren Bereich ohne Hülsen (größerer Abstand von den Stegrücken zur Zylinderinnenwandung). Wenn an den Stützhülsen ein Verschleiß aufgetreten ist, der über ein zulässiges Maß hinausgeht, erfolgt eine Auswechselvorgang.

In Fig. 2 wird eine Hülse 15 in einem Gehäuseabschnitt eines Doppelschneckenextruder-Gehäuseabschnittes 13 gezeigt. In diesem Fall ist die Hülse 15 zusätzlich in einem Verschleißschutzeinsatz 12 eingesetzt.

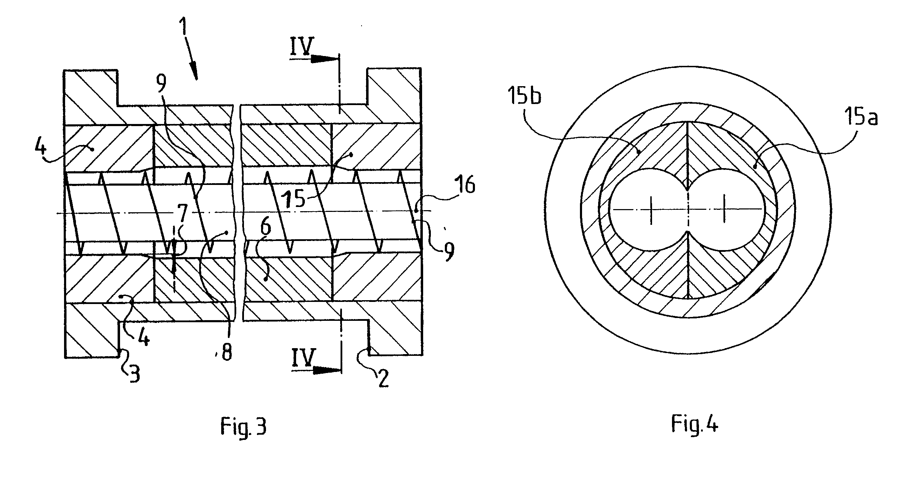

Bei der in Fig. 3 gezeigten Ausführungsform ist zwischen den Hülsen 4 und 15 ein Verschleißeinsatz angeordnet.

In Fig. 4 ist in einem Gehäuse eines Doppelschneckenextruders eine Hülse eingesetzt, die mittig aus den Teilen 15a und 15b zusammengeschweißt wurde.

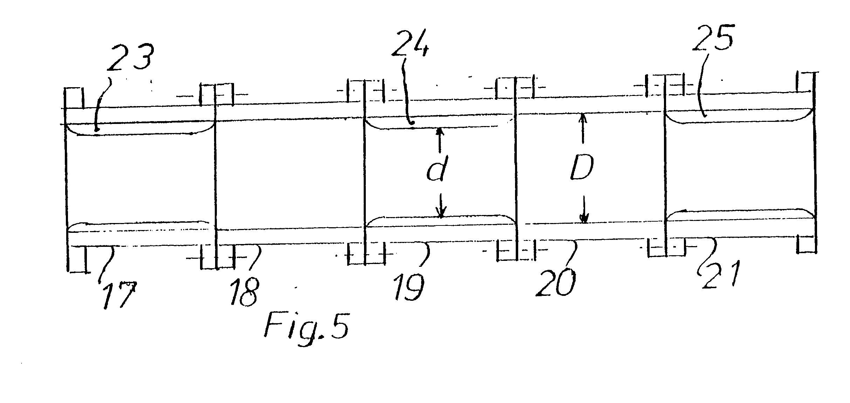

Die in Fig. 5 gezeigte Ausführungsform der Erfindung zeigt einzelne Zylinderabschnitte 17, 18, 19, 20 und 21, wobei in die Abschnitte 17, 19 und 21 Hülsen 23, 24 und 25 eingesetzt sind. Diese Ausführungsform gewährleistet, daß die Korrosion und der Verschleiß im wesentlichen auf die Hülsen beschränkt bleibt.

Die Kosten für den Korrosions- und Verschleißschutz werden in jedem Fall um bis zu 70 % gegenüber einem in der gesamten Zylinderlänge angeordneten Verschleißeinsatz gesenkt. Die Herstellung von Verschleißschutzauskleidungen eines gesamten Zylinders , z.B. nach dem HIP(High-Isostatic-Pressure)-Verfahren ist sehr aufwendig und teuer. Aber auch Einsätze aus ausgehärtetem Chromstahl sind sehr kostenaufwendig. Auf der anderen Seite ist der Förder- bzw. Druckverlust durch die vergrößerten Abstände zwischen den Schneckenstegrücken und der Zylinderinnenwandung an den Stellen ohne Stützhülse nur sehr gering und daher vernachlässigbar.

**Bezugszeichenliste:**

| | | |
|---|---|---|
| 1 = | Gehäuseabschnitt |
| 2 = | Verbindungsflansch |
| 3 = | Verbindungsflansch |
| 4 = | Hülse |
| 5 = | Hülse |
| 6 = | Verschleißeinsatz |
| 7 = | Überstehabstand |
| 8 = | Schnecke |
| 9 = | Schneckensteg |
| 13 = | Doppelschneckenextrudergehäuseabschnitt |
| 14 = | Achtbohrung |
| 15 = | Hülse |
| 15a = | Hülsenabschnitt |
| 15b = | Hülsenabschnitt |
| 16 = | Längsmittelachse |
| 17 = | Zylinderabschnitt |
| 18 = | Zylinderabschnitt |
| 19 = | Zylinderabschnitt |
| 20 = | Zylinderabschnitt |
| 21 = | Zylinderabschnitt |
| 23 = | Hülse |
| 24 = | Hülse |
| 25 = | Hülse |

**Ansprüche**

1. Verschleißgeschütztes Gehäuse für eine Schneckenstrangpresse für die Verarbeitung von thermoplastischen Kunststoffen, Kautschuk, Nahrungsmitteln, mit einer oder mehreren achsparallelen Schneckenbohrungen zur Aufnahme jeweils einer Schnecke, wobei das Gehäuse in mehreren Abschnitten unterteilt sein kann,

**dadurch gekennzeichnet,**

daß in den beiden Endbereichen der Gehäuseabschnitte (1) in Richtung der Längsmittelachse (16) der Schneckenbohrungen überstehende, einen kleineren Durchmesser (d) als die Gehäusebohrung (D) im mittleren Bereich der Gehäuseabschnitte aufweisende, die rotierende(n) Schnecke(n) (8) aufnehmende Hülsen (4, 5, 11, 15, 23, 24, 25) angeordnet sind.

2. Verschleißgeschütztes Gehäuse nach Anspruch 1,

**dadurch gekennzeichnet,**

daß die Hülsen (4, 5, 11, 15) aus einem, eine gegenüber der mittleren Bohrungsauskleidung (10) höhere Abriebfestigkeit und Korrosionsbeständigkeit aufweisenden Metall bzw. einer Metallegie rung bestehen.

3. Verschleißgeschütztes Gehäuse nach Anspruch 1,

**dadurch gekennzeichnet,**

daß die beiden, die Korrosion und die Abrasion übernehmenden, eine Hülse aufweisenden Endbereiche gebildet werden durch über ihre gesamte Bohrungslänge einen kleineren Durchmesser (d) und eine Hülse (23, 24, 25) aufweisenden, kompletten Zylinderabschnitte, die im Wechsel mit keine Hülse aufweisenden, über ihre gesamte Bohrungslänge einen größeren Durchmesser (D) aufweisenden, kompletten Zylinderabschnitte angeordnet sind.

4. Verschleißgeschütztes Gehäuse nach Anspruch 1,

**dadurch gekennzeichnet,**

daß die Hülsen (4, 5, 11, 15) 0,05 bis 5 mm, insbesondere 0,1 bis 3 mm, vorzugsweise 1,5 mm überstehen.

5. Verschleißgeschütztes Gehäuse nach den Ansprüchen 1 bis 4,

**dadurch gekennzeichnet,**

daß die Hülsen (4, 5, 11, 15) eine axiale Länge von 0,01 bis 2 D (D = Schneckendurchmesser) aufweisen.

6. Verschleißgeschütztes Gehäuse nach den Ansprüchen 1 bis 5,

**dadurch gekennzeichnet,**

daß die Hülsen (4, 5, 11, 15) aus einem gegenüber der mittleren Bimetallbohrungsauskleidung der Zylinderabschnitte eine höhere Korrosionsbeständigkeit und Abriebfestigkeit aufweisenden Bimetall bestehen.

7. Verschleißgeschütztes Gehäuse nach den Ansprüchen 1 bis 6,

**dadurch gekennzeichnet,**

daß die Hülsen (4, 5, 11, 15) aus Bimetall oder ausgehärtetem Chromstahl bestehen.

8. Verschleißgeschütztes Gehäuse nach den Ansprüchen 1 - 7,

**dadurch gekennzeichnet,**

daß die Hülsen (4, 5, 15, 23,2 4, 25) auswechselbar ausgebildet sind.

9. Verschleißgeschütztes Gehäuse nach den Ansprüchen 1 - 8,

**dadurch gekennzeichnet,**

daß die Hülsen (4, 5, 15, 23, 24, 25) eingepreßt, eingeschraubt, eingeklebt oder mittels einer formschlüssigen Befestigungsart (z.B. Schwalbenschwanz) mit den Zylindergehäuseabschnitten (1, 13) verbunden sind.

10. Verschleißgeschütztes Gehäuse nach den Ansprüchen 1 - 9,

**dadurch gekennzeichnet,**

daß die Hülsen (4, 5, 11, 15) in die Bohrungen eines Doppelschneckenextruders (13) mit kämmenden oder nicht kämmenden Schnecken einsetztbar ausgebildet sind, und

daß die Hülsen (11) aus einem Stück oder aus zwei im Überschneidungsbereich der Bohrungen zusammengeschweißte Abschnitte (15a, 15b) gebildet werden.

Fig. 2

Fig. 1

Fig.4

Fig.3

Fig. 5

7

Europäisches
Patentamt

# EUROPÄISCHER RECHERCHENBERICHT

Nummer der Anmeldung

## EP 90 11 9323

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 602 313   (REINHARD)<br>* Seite 12, Zeilen 20-28; Figur 6 *<br>— — — | 1,2,5,8,9, 10 | B 29<br>C 47/08<br>B 29 C 47/66 |
| Y | | 6,7 | |
| A | DE-B-2 423 785   (WERNER & PFLEIDER)<br>* Spalte 8, Zeilen 28-35,51-64 *<br>— — — | 1,2,5,8,9, 10 | |
| Y | KUNSTSTOFFE, Band 71, Nr. 5, Mai 1981, Seiten 266-271, Carl Hanser Verlag, München, DE; K. MAUCH: "Aufbereiten von technischen Kunststoffen"<br>* Seite 270, rechte Spalte, Zeilen 4-9 *<br>— — — — — | 6,7 | |

|  |
|---|
| RECHERCHIERTE SACHGEBIETE (Int. Cl.5) |
| B 29 C 47/00 |

Der vorliegende Recherchenbericht wurde für alle Patentansprüche erstellt

| Recherchenort | Abschlußdatum der Recherche | Prüfer |
|---|---|---|
| Den Haag | 11 März 91 | LEONCAVALLO G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument